# EUROPEAN PATENT APPLICATION

(11) **EP 0 734 655 A1**
(43) Date of publication of application: **02.10.1996**
(21) Application number: 95400459.4
(22) Date of filing: 03.03.1995
(51) Int. Cl.: A23G 3/20, A23G 3/28, A23G 3/00

(54) **Printing method and apparatus for confectionery products utilizing edible ink**

(71) Applicant: AHN Sung Ae, Seoul (KR)
(72) Inventor: AHN Sung Ae, Seoul (KR)
(74) Representative: Joly, Jean-Jacques

(57) **Abstract**

A printing method and apparatus for confectionery products which can print various characters and shapes on or in the confectionery products utilizing edible ink. According to the method and apparatus, a confectionery mixture is solidified after filling a mold and etched plates are prepared in accordance with shapes and colors to be printed.

The edible ink is supplied to the etched plate (3), and a transfer pad (2) transfers the shapes to be printed from the etched plate to the solidified confectionery mixture in the mold (1). The printing operation is repeatedly performed in accordance with the colors of the shapes to be printed. In case of printing for a transparent candy, the shapes may be printed inside the candy by additionally filling the mold with the candy mixture after the shapes are transferred to the solidified candy mixture by the transfer pad.

## Description

### BACKGROUND OF THE INVENTION

### 1. Field Of the Invention

The present invention relates to a printing method and apparatus for confectionery products which can print various characters and shapes on or in the confectionery products such as candies, pastries, etc.

### 2. Description of the Related Art

Since confectionery products have sweet tastes and have the effect of recovering fatigue, they have been loved by many people regardless of the old and young, male and female, and are available in the market with various taste and shapes. Such confectionery products may be transparent, may be made from the mixture having special color, or may have peculiar shapes so as to arouse the devotees' interests.

Conventionally, any shape or character for arousing the devotees' interest cannot be directly printed on the confectionery products since they are foodstuffs, but can be printed only on their packing papers or stickers attached thereto.

### SUMMARY OF THE INVENTION

It is an object of the present invention to provide a printing method and apparatus for confectionery products which can directly print various characters and shape on or in the confectionery products utilizing edible ink, and thereby improve the marketability of the confectionery products.

It is another object of the present invention to provide a printing method and apparatus for confectionery products which enables printing operation to be repeated in accordance with colors of the shape to be printed and can accurately display the printed shape regardless of the surface evenness of the confectionery products.

In order to achieve the above objects, there is provided a printing method for confectionery products utilizing edible ink, comprising the steps of:
filling a mold with a confectionery mixture and solidifying the mixture in the mold;
preparing etched plates in accordance with shapes and colors to be printed and filling an etched portion of each etched plate with the edible ink; and
transferring the shapes to be printed from the etched plate filled with the edible ink to a transfer pad and transferring the shapes transferred to the transfer pad to the confectionery mixture solidified in the mold.

Preferably, the printing method according to the present invention further comprises the step of additionally filling the mold with the confectionery mixture after the shapes are transferred from the transfer pad to the confectionery mixture solidified in the mold.

According to the present invention, there is also provided with a printing apparatus for confectionery products utilizing edible ink, comprising:
means for conveying a confectionery mixture to a printing position and to a filling position;
means for displacing etched plates prepared in accordance with shapes and colors to be printed;
means for uniformly filling each etched plate with said edible ink;
a transfer pad for transferring said shapes to be printed from said etched plates filled with said edible ink to said confectionery mixture so as to print said shape on said confectionery mixture; and
means for controlling movement of said transfer pad so that the said transfer pad moves between the said etched plate and the said confectionery mixture to perform transferring operation.

### BRIEF DESCRIPTION OF THE DRAWINGS

The above and other features and advantages of the present invention will be apparent to those skilled in the art from the following detailed description, taken together with the accompanying drawings, in which:
FIGs. 1A and 1B are a plan view and a side view of a mold for solidifying a confectionery mixture in a predetermined form.
FIGs. 2A to 2F are views explaining the printing method according to the present invention.
FIG. 3 is a perspective view of a candy product produced in accordance with the present invention.

### DETAILED DESCRIPTION OF THE PREFERRED EMBODIMENT

As an embodiment of the present invention, a printing operation for a transparent candy product will be explained in detail.

First, in order to produce a candy product, candy compositions, which are same as those a general depositing candy, are concentrated, and the concentrated candy compositions are mixed based on the composition ratio as in Table 1 shown below.

**〈TABLE 1〉**

| | white sugar | glucose | lactic acid | spices | food colors | total |
|---|---|---|---|---|---|---|
| composition ratio | 59.20 % | 39.47 % | 1.00 % | 0.32 % | 0.01 % | 100.00 % |

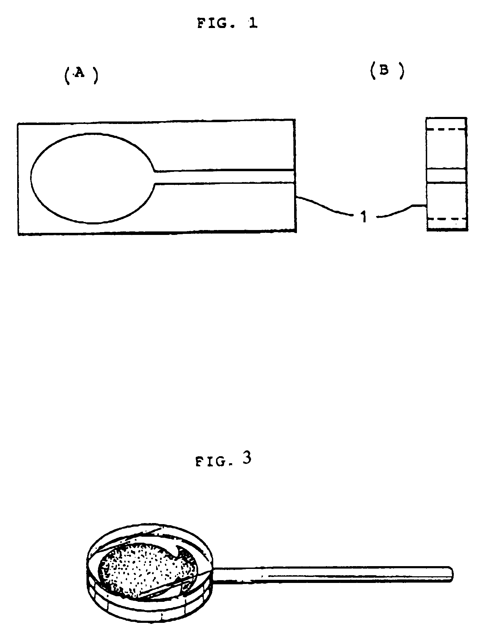

FIGs. 1A and 1B show a mold for filling with and solidifying a complete candy mixture. About 40-60% by weight of the candy mixture firstly fills the mold 1 and then is solidified by a cooling process.

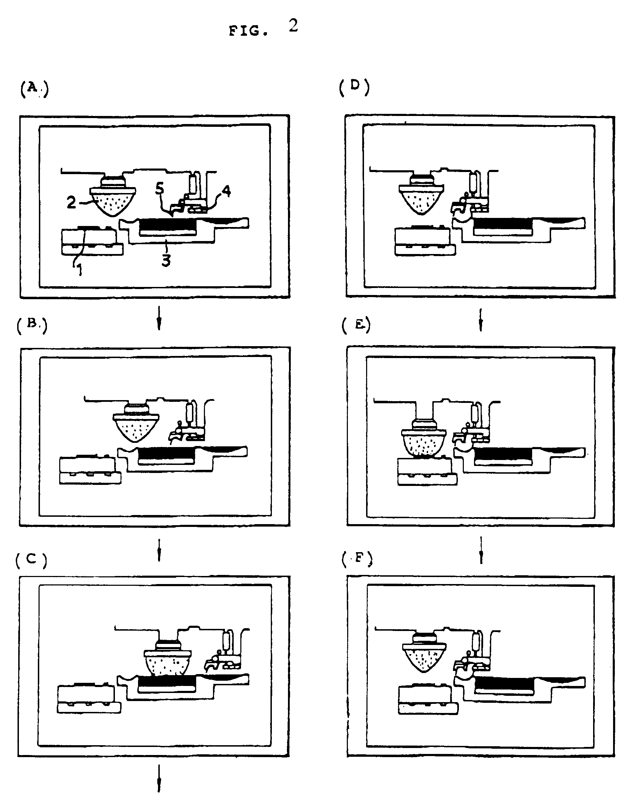

The solidified candy product with the mold 1 is conveyed to a printing position. FIGs. 2A to 2F show the printing process of the candy product performed by the printing apparatus according to the present invention.

A shape to be printed is designed or photographed and then divided in accordance with the colors of the shape.

Thereafter, etching films which correspond to the respective colors of the shape are prepared to produce respective etched plates 3. Preparation of printing is completely by mounting the etched plates on the printing apparatus of the present invention. The edible ink per color is fed to the printing apparatus and the candy product solidified in the mold 1 is automatically conveyed to the printing position as shown in FIG. 2A.

Next, the edible ink fills the etched portion of the etched plate 3 by a doctoring process with an ink scoop 4, and then is uniformly spread by the movement of a blade 5 as shown in FIG. 2B.

After the above process is completed, a silicone pad 2, i.e., the transfer pad, moves to the etched plate 3, and then presses the etched portion of the etched plate 3 with a predetermined pressure as shown in FIG. 2C. At this time, the edible ink in the etched portion of the etched plate 3 is transferred to the silicone pad 2. The silicone pad 2 then moves to the printing position of the solidified candy product in the mold 1 as shown in FIG. 2D.

Thereafter, the silicone pad 2 having moved to the printing position presses the surface of the candy product with a predetermined pressure as shown in FIG. 2E.

Accordingly, the shape transferred to the silicone pad 2 is then transferred to and printed on the surface of the candy product.

When the transfer of the shape is completed, the silicone pad 2 is returned to its original position as shown in figure 2F and the printed candy product is conveyed to another printing position for the print of another color. The above printing process is repeated in order to print all the colors of the shape on the candy product. In the embodiment, at least one candy product is printed, and the printing operation is repeatedly performed over 60 times per minutes.

When the repeated printing operation is completed in accordance with the colors of the shape, the printed candy product is dried through a drying process and then conveyed to a following position so that the residual candy mixture additionally fills the mold 1. This additional filling process is the same as the above-mentioned filling process of the candy mixture.

After completion of the additional filling process, the residual candy mixture filling the mold 1 is solidified by the cooling process to finish the printing operation. A finished candy product is separated from the mold 1 and then packed through a packing process.

FIG.3 shows the finished candy produced by the printing method and apparatus according to the present invention. As shown in FIG. 3, the shape is printed inside the transparent or semi-transparent candy product. Also, a stick may be attached to the candy product if required.

Meanwhile, the printing method and apparatus can be also applied to any confectionery product including an opaque candy product.

As described above, the present printing method and apparatus can effect a clear printing of various shapes and characters directly on or in the confectionery products utilizing edible ink, thereby improving the marketability of the products.

Further, according to the present method and apparatus, printing operation is repeatedly performed in accordance of the colors of the shape to be printed, and thus a colorful display of the shape can be achieved regardless of the surface evenness of the confectionery product.

While the present invention has been described with reference to the preferred embodiment thereof, it will be understood by those skilled in the art that various changes in form and details may be made therein without departing from the spirit and scope of the invention as defined by the appended claims.

## Claims

1. A printing method for confectionery products utilizing edible ink, comprising the steps of:
filling a mold with a confectionery mixture and solidifying the mixture in the mold;
preparing etched plates in accordance with shapes and colors to be printed and filling an etched portion of each etched plate with the edible ink; and
transferring the shapes to be printed from the etched plate filled with the edible ink to a transfer pad and transferring the shapes transferred to the transfer pad to the confectionery mixture solidified in the mold.

2. A printing method as claimed in claim 1, further comprising the step of additionally filling the mold with the confectionery mixture after the shapes are transferred from the transfer pad to the confectionery mixture solidified in the mold.

3. A printing method as claimed in claim 1, wherein the etched plate preparing step comprises:
designing or photographing the shapes to be printed and dividing the shapes in accordance with the colors of the shapes; and
preparing etching films in accordance with the colors of the shapes to produce the etched plates corresponding to the etching films.

4. A printing method as claimed in claim 1, wherein the shape transferring step is repeatedly performed in accordance with the colors of the shapes.

5. A printing apparatus for confectionery products utilizing edible ink, comprising:
a mold for solidifying a confectionery mixture;
means for conveying said confectionery mixture in said mold to a printing position and to a filling position;
means for displacing etched plates prepared in accordance with shapes and colors to be printed;
means for uniformly filling each etched plate with said edible ink;
a transfer pad for transferring said shapes to be printed from said etched plate filled with said edible ink to said confectionery mixture so as to print said shapes on said confectionery mixture; and
means for controlling movement of said transfer pad so that said transfer pad moves between said etched plate and said confectionery mixture to perform transferring operation.

6. A printing apparatus as claimed in claim 5, wherein said edible ink filling means comprises:
an ink scoop for supplying said edible ink to said etched plate; and
a blade for uniformly spreading said edible ink supplied to said etched plate.

7. A printing apparatus as claimed in claim 5, wherein said transfer pad is a silicone pad.

8. A printing apparatus as claimed in claim 5, further comprising:
a cooling means for solidifying said confectionery mixture; and
means for drying a printed portion of said confectionery mixture.
